# EUROPEAN PATENT SPECIFICATION

(11) **EP 4 227 163 B1**
(45) Date of publication and mention of the grant of the patent: **25.09.2024**
(21) Application number: 22156576.5
(22) Date of filing: 14.02.2022
(51) Int. Cl.: B60R 11/04

(54) **ATTACHMENT ARRANGEMENT FOR A CAMERA MODULE AT A VEHICLE**
BEFESTIGUNGSANORDNUNG FÜR EIN KAMERAMODUL AN EINEM FAHRZEUG
AGENCEMENT DE FIXATION POUR MODULE DE CAMÉRA SUR UN VÉHICULE

(43) Date of publication of application: 16.08.2023
(73) Proprietor: Magna Electronics Sweden AB, 447 37 Vårgårda (SE)
(72) Inventor: ALM, Gustav, 583 30 Linköping (SE); LAUDON, Johan, 583 30 Linköping (SE); ANDERSSON, Johan, 583 30 Linköping (SE)
(74) Representative: Müller Verweyen

(56) References cited:
- EP-A1- 2 942 939
- EP-A1- 3 572 287
- EP-A1- 3 835 134
- US-A1- 2017 217 382
- US-A1- 2019 351 840

## Description

The invention relates to an attachment arrangement for a camera module at a vehicle comprising a base plate which is attachable at a vehicle fixed structure, wherein the camera module comprises a housing and at least one camera arranged therein, wherein the housing is attached at the base plate with at least two spring loaded protrusions each abutting at separate attachment flanges.

From the document US 2019/351840 A1, EP 3 572 287 A1 and EP 2 942 939 A1 are known further vehicle camera assemblies comprising a base plate for attaching a camera module at a vehicle structure.

From the EP 3 180 212 B1 it is known an attachment arrangement which comprises a base plate which is designed to be fixed at the vehicle structure and which serves as a base to attach a camera module. The base plate could be fixed for example at a front window of the vehicle by gluing and comprises several attachment flanges for the attachment of the camera module. The camera module comprises a housing with several outwardly extending protrusions and one or two cameras arranged therein, wherein the camera module is attachable via the protrusions of the housing at the attachment flanges of the base plate.

The attachment flanges are shaped roof-like in a U-shaped or V-shaped manner and are arranged with the opening in opposite to the mounting direction to prevent an unintended release of the camera module from the base plate in case of an accident.

Furthermore, metal springs are arranged in the attachment flanges to tension the camera module into the mounting position. The metal springs are designed as flat metal plates and are positioned in the opening of the flanges in a predetermined position, so that the camera module abuts with the protrusions at the metal springs in the mounting position and is tensioned by the springs to the mounting position. The purpose of the metal springs is a reduction of the transmission of vibrations and to ensure that the camera module is kept in the predetermined orientation and position with a high precision.

The metal springs are designed as separate parts from a different material than the base plate and need to be assembled in a separate assembling step which increases the effort for assembling the base plate. Furthermore, the use of a different material for the springs shows that the design requires a high strength of the springs and further results, in a high local loading of the flanges and the protrusions for tensioning the camera module versus the base plate to the mounting position.

From the document EP 3 835 134 A1 it is known to design the springs as integrated parts of the housing or of the base plate in form of flexible attachment flanges. Furthermore, it is known from this document to provide rips at the attachment flanges for a punctual or linear abutment of the protrusions at the attachment flanges to enable an attachment of the camera module with a higher precision with respect to a predefined position.

From the document US 2017/217382 A1 it is further known an attachment arrangement for a camera module comprising all features of the preamble of claim 1.

In view to this background, it is the object of the invention to provide an attachment arrangement for a camera module at a vehicle, with a facilitated assembly process of the camera module and an improved attachment of the camera module with respect to the precision of the attachment of the camera module at the base plate and therefore of the camera module at the vehicle after the final attachment at the vehicle.

According to the invention it is suggested an attachment arrangement comprising the features of claim 1. Further preferred embodiments are given in the subclaims and may be further obtained from the figures and the related description.

According to the basic idea of the invention it is suggested that at least one of the rips may be used as a guidance for at least one alignment pin in the assembly process.

The advantage of the suggested solution is an improved fixation of the camera module with a higher precision with respect to a predefined position of the camera module as the fixation of the camera module via the spring-loaded protrusions at the attachment flanges and the alignment of the camera module are realized in separated locations and independent from each other. The positioning and alignment of the camera module is defined by the alignment pins and the alignment surface structures which can be designed especially in their orientations and dimensions independent from the fixation of the camera module. The fixation of the camera module is realized by the spring-loaded protrusions and the attachment flanges which can be designed independent from the precision criteria only with respect to their original fixation function. The parallel extending rips act as heat sinks to enable a heat transfer from the base plate or the camera module to the interior of the vehicle. The camera module is exposed to a high heat by being fixed at the windshield and the introduced heat of the sun through the windshield. This heat may be transferred by the rips from the base plate or the housing to the interior of the vehicle, and the heat influence acting on the camera module may be reduced. Thereby a deformation due to thermal influence of the camera module and its attachment may prevented up to a certain temperature. As the rips are arranged in parallel to each other the heat transfer can be realized homogenously. The advantage of the arrangement of the rips can be seen therein that strength of the base plate and/or the camera module is increased by the rips in the mounting direction. The assembly process can be thereby facilitated as the camera module and the base plate are guided in their movements in a predetermined course until the camera module reaches the final attachment position.

Furthermore, it is suggested that at least one pair of one alignment surface structure and one alignment pins is designed as a 2-point-contact abutment. The suggested 2-point-contact abutment enables a precises alignment of the camera with respect to the defined by the connecting line of the two contact points. In other words, the camera module may be moved only perpendicular to the axis defined by the connecting line of the two contact points.

The suggested 2-point-contact surface can be realized very easily by at least one pair of one alignment surface structure and one alignment pin being designed as a contact of a groove and a conical surface.

Furthermore, it is suggested that at least two pairs of one alignment surface structure and one alignment pin are designed as 2-point-contact abutments, wherein the contact points are arranged in that way, that the connecting line of the contact points of one pair is arranged perpendicular to the connecting line of the contact points of the other pair of contact points. The advantage in this design is that the camera module is adjusted thereby very precisely with respect to the predefined position as both alignment surface structures and alignment pins enable only one single movement like described above, wherein one of the two pairs of alignment structure surface and alignment pin limits the possible movement enabled by the other pair of alignment structure surface and alignment pin and vice versa.

Furthermore, at least one of the rips comprises preferably a step which limits the assembly movement of the camera module to a predefined position with respect to the base plate and the opposing base plate and/or camera housing comprise a projection which limits the assembly movement of the camera module to a predefined position with respect to the base plate by abutting at the step. The predefined position corresponds to the final attachment position and is specified by the position of the step. The handling person can perform the assembly process without taking care of the final attachment position as this is automatically realized in the assembly process when the camera module abuts with the step at the base plate.

In the following the invention is illustrated on the basis of two preferred embodiments with reference to the accompanying drawings, wherein:
- Fig. 1,3,5,7,8 and 11: shows a camera module with a base plate in an attachment arrangement with the single parts according to a first embodiment; and
- Fig. 2,4,6,9,10 and 12: shows a camera module with a base plate in an attachment arrangement with the single parts according to a second embodiment.

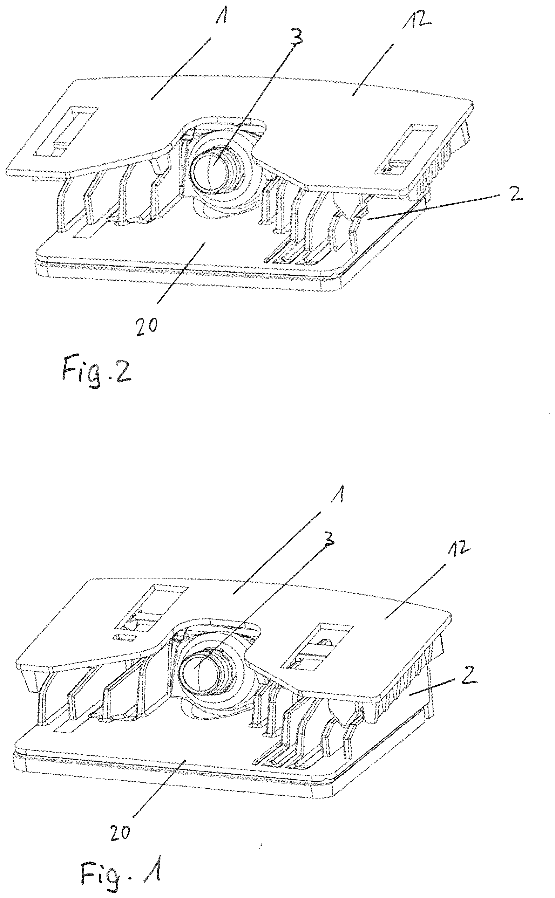

In the figures 1 and 2 are shown two different camera modules 2 with base plates 1 which are connected according to a suggested attachment arrangement. The base plates 1 comprise a flat attachment surface 12 to connect the base plate 1 to a vehicle structure. One possible embodiment is to attach the base plate 1 with the attachment surface 12 for example by gluing at a front or rear window of the vehicle.

The camera modules 2 are provided with one camera 3 as a mono camera but may be also provided with an additional camera to realize a stereo camera if needed. The correct orientation and position of the camera 3 is an essential quality criterion for the functionality of the camera 3 and especially for the quality and analysis of the image data and the processing of the signals derived therefrom. Therefore, a precise and reliant attachment of the camera modules 2 is of very high importance for the camera modules 2 itself and the quality of the signals processed from the detected data of the camera modules 2.

The base plates 1 comprise the attachment surface 12 to mount the base plates 1 at the vehicle structure. The other side of the base plates 1 are used to attach the camera modules 2.

The camera 3 is directed to the outside of the vehicle, which means for an attachment at the front window, that the camera 3 is directed in the mounted position of the camera module 2 to the frontside of the vehicle. The direction of the camera 3 will be designated in the following as the detection direction.

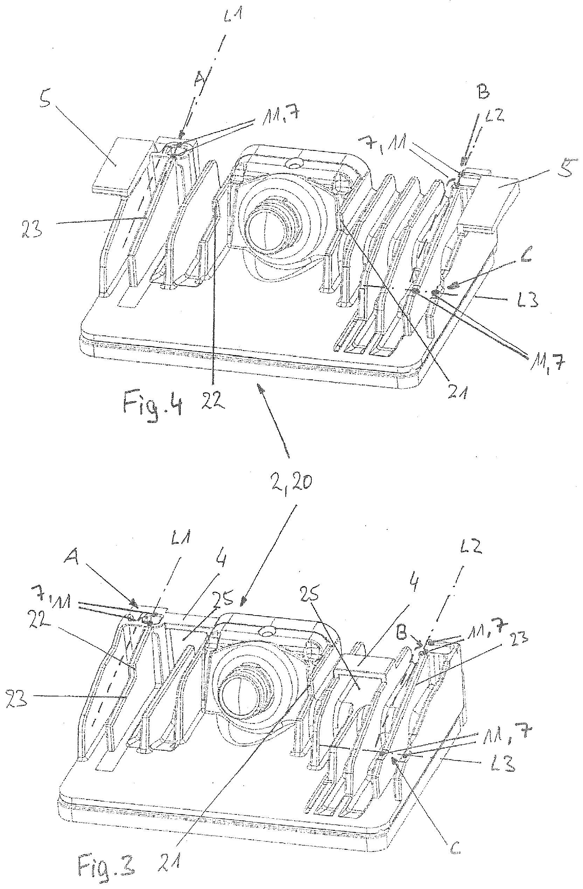

The camera modules 2 shown in the fig. 3 and 4 comprise a housing 20 with two flanges 4 or 5, wherein the flanges 5 according to the second embodiment are formed as outwardly to the right- and left-side protruding arms and the flanges 4 according to the first embodiment are designed as two racks connecting two parallel rips 23 of the housing 20 to circumferentially closed openings 25.

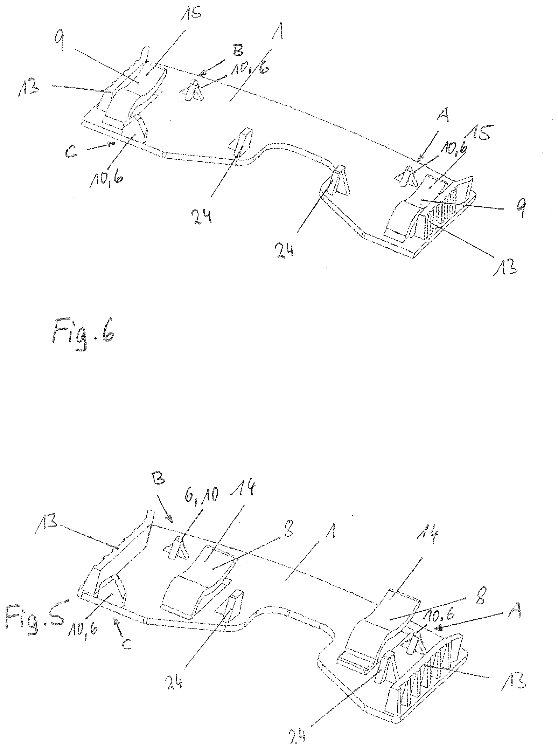

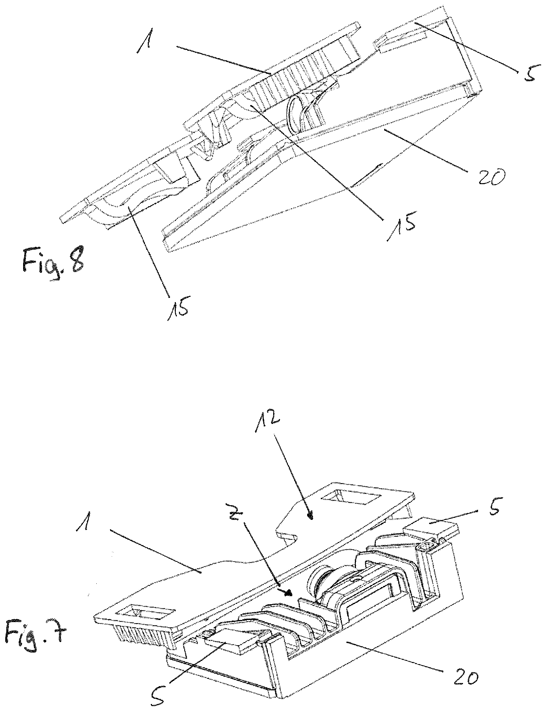

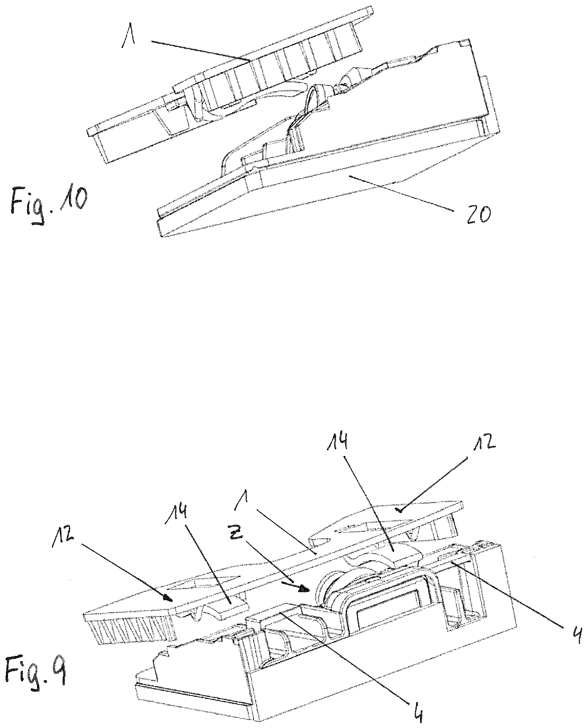

The base plates 1 shown in the fig. 5 and 6 comprises two protrusions 14 and 15, wherein the protrusions 15 according to the second embodiment are arranged at the side rims of the base plate 1 with a maximum distance to each other, and the protrusions 14 according to the first embodiment are arranged more in the center of the base plate 1 with a smaller distance to each other. The protrusions 14 and 15 are formed as flexible hook-shaped arms formed integrally at the base plate 1. The protrusions 14 and 15 are arranged pairwise and parallel to each other with the free ends arranged and directed to the same side. The protrusions 14 and 15 are arranged pairwise and parallel to each other in each of the embodiments with an orientation parallel to the insertion direction in arrow Z like shown in the figures 7 and 9. The base plates 1 further comprise at their outer rims two parallel extending side walls 13, which are arranged also in parallel to the protrusions 14 and 15.

During the assembly process shown in the figures 7 and 8 and the figures 9 and 10 the base plates 1 are inserted with the protrusions 14 or 15 in the direction of the arrow Zunder the flanges 4 or 5 of the housings 20 of the camera modules 2. The protrusions 14 or 15 are designed as integrated parts of the base plate 1 made of a plastic molding part. The protrusions 14 and 15 extend in a predetermined direction to the outside of the base plate 1. Both protrusions 14 or 15 are designed as leaf springs 8 or 9 and are connected which one end with the base plate 1 while the other end is free, so that the springs 8 or 9 may perform with their free ends elastic movements with respect to the base plates 1. The springs 8 or 9 are oriented and positioned in such a way that the camera modules 2 gets in contact with the housings 20 and the flanges 4 or 5 at the protrusions 14 or 15 of the base plates 1 while the insertion movement with tensioning the protrusions 14 or 15. Therefore the housings 20 and the base plates 1 of both embodiments are spring loaded in the final attachment via the protrusions 14 or 15 acting as springs 8 or 9 to a fixed assembly group.

Like shown in the figures 3 and 4 the housings 20 of the camera modules 2 comprise a plurality of upright extending rips 23, which increase the surfaces of the housings 20 and therefore increase the heat transfer from the housings 20 to the interior of the vehicle. The rips 23 act thereby as heat sinks and reduce the temperature of the housings 20 in case of temperature influence. The camera modules 2 are attached via the base plates 1 at the frontal windshield of the vehicle. Therefore, the base plates 1 are exposed to a very high temperature influence by the sun shining through the windshield, which results in a heating of the base plates 1 and the housings 20 of the camera modules 2 up to 50 degrees Celsius and more. In order to prevent a deformation of the base plates 1 or the camera modules 2 due to that temperature influence the heat is transferred by the rips 23 to the interior of the vehicle and the maximum temperature of the housings 20 may be therefore reduced.

The rips 23 are arranged in parallel to each other in the direction of the insertion movement of the housings 20 to the base plates 1 in the direction of the arrow Z (see figures 7 and 9). Furthermore, all rips 23 or groups of the rips 23 may be arranged with identical distances to each other to enable a homogeneous heat transfer from the housings 20 to the interior of the vehicle. Furthermore, the housings 20 are provided with three pairs of two opposing contact points 11, which are designed as alignment surface structures 7. The contact points 11 are arranged at opposing walls of the base plates 1, wherein the connection lines L1 and L2 of two pairs of contact points 11 are aligned parallel to each other and parallel to the insertion direction in the direction of arrow Z while the third pair of contact points 11 are arranged with a connection line L3 running perpendicular to the connection lines L1 and L2 of the first pairs of contact points 11.

The base plates 1 of the two embodiments shown in the figures 5 and 6 both comprise three upright extending conical tips 10 which are located and formed as alignment pins 6 to align the housings 20 of the camera modules 2 versus the base plates 1 in the mounted position. The conical tips 10 are designed as flat walls with two oblique side walls and may be reinforced by additional side arms. Furthermore, at two of the rips 23 two steps 21 and 22 are provided at the housings 20 and two projections 24 are provided at the base plates 1 which are formed as upright extending pins.

In the figures 7 and 8 it is shown the mounting of the base plate 1 at the housing 20 of the camera module 2 according to the first embodiment. The base plate 1 is pushed in direction of the arrow Z. During this movement each of the most forward conical tips 10 get in contact with one top-side of one rip 23 and slide along the rips 23 corresponding to the dashed lines shown in figure 4 until they reach the most rearward contact points 11 of the housing 20. At the end of the insertion movement also the most rearward conical tip 10 gets in contact with two contact points 11 of two different rips 23. The insertion movement may be additionally guided by the side walls 13 at the side rims of the base plate 1 by sliding of the side walls 13 at the outer sides of the flanges 5. To improve the guidance of the base plate 1 during the mounting process the side walls 13 of the base plate 1 are formed also conical versus each other with reducing distances to the center of the base plate 1. Thereby the side walls 13 have also a centering effect while the insertion movement of the base plate 1. The insertion movement of the base plate 1 is limited to a predetermined position of the base plate 1 by the projections 24 abutting at the steps 21 and 22 of the rips 23. During this insertion movement of the base plate 1 the protrusions 15 are inserted under the flanges 5 to the position shown in the cross-section 12.

In the figures 9 and 10 it is shown the mounting of the base plate 1 at the housing 20 of the camera module 2 according to the second embodiment. The base plate 1 is pushed in direction of the arrow Z. During this movement the most forward conical tips 10 each get in contact with one top-side of one rip 23 and slide along the rips 23 corresponding to the dashed lines shown in figure 3 until they reach the most rearward contact points 11 of the housing 20. At the end of the insertion movement also the most rearward conical tip 10 gets in contact with two contact points 11 of two different rips 23. The insertion movement may be additionally guided by the side walls 13 at the side rims of the base plate 1 by sliding at the outer sides of the housing 20. To improve the guidance of the base plate 1 during the mounting process the side walls 13 of the base plate 1 are formed also conical versus each other with reducing distances to the center of the base plate 1. Thereby the side walls 13 have also a centering effect while the insertion movement of the base plate 1. The insertion movement of the base plate 1 is limited to a predetermined position of the base plate 1 by the projections 24 abutting at the steps 21 and 22 of the rips 23. During this insertion movement of the base plate 1 the protrusions 14 are inserted under the flanges 4 to the position shown in the cross-section 11.

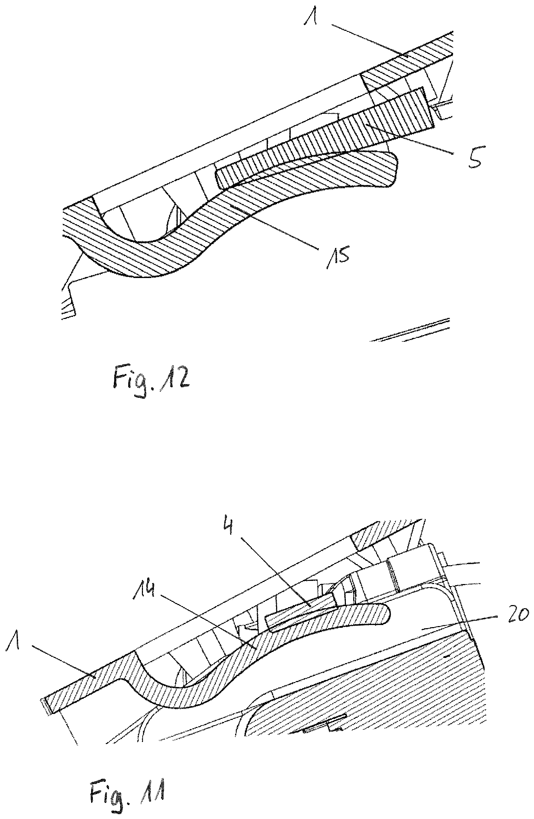

In the figures 11 and 12 the protrusions 14 and 15 overlap the flanges 4 and 5 which shows the dimensioning of the protrusions 14 and 15. In reality the protrusions 14 and 15 do not overlap the flanges 4 and 5 and are elastically deformed instead. The protrusions 14 and 15 abut thereby at the lower surfaces of the flanges 4 and 5 with exerting a tensioning force to the flanges 4 and 5 and pressing the base plates 1 to the housings 20 of the camera modules 2.

The suggested attachment arrangement is characterized by a very high precision with respect to a predetermined position and orientation of the camera modules 2 versus the base plates 1. This is achieved by separating the functions of the application of the attachment forces and the alignment of the camera modules 2. The application of the attachment forces is realized by the protrusions 14 or 15 abutting at the flanges 4 or 5. The alignment of the camera modules 2 versus the base plates 1 is realized by three 2-point contact abutments A,B,C each designed as a pair of one alignment surface structure 7 at the housing 20 of the camera module and one alignment pin 6 at the base plate 1. The contact points 11 of the alignment surface structures 7 of the first two 2-point contact abutments A and B are located at two opposing walls of the housing 20 which run perpendicular to the insertion direction of the base plates 1 in the direction of arrow Z. The contact points 11 of the alignment surface structure 7 of the third 2-point contact abutment C are located at two parallel rips 23 which run parallel to the insertion direction of the base plate 1 in the direction of arrow Z. The alignment pins 6 are all designed as conical tips 10 with two oblique side rims. All three 2-point contact abutments A,B,C are designed therefore as contacts of grooves between the opposing walls or the rips 23 and a conical surface provided by the conical tips 10.

The positions of the contact points 11 are furthermore advantageous as the connecting lines L1 and L2 of the first 2-point contact abutments A and B are running in the direction of the insertion direction and parallel to each other, so that the insertion movement is limited by the conical tips 10 getting in contact with the contact points 11. The contact points 11 of the third 2-point contact abutment C defining a connecting line L3, which runs perpendicular to the connecting lines L1 and L2.

Therefore, the third 2-pont contact abutment C defines the position of the base plate 1 perpendicular to the insertion direction of the base plate 1 and the first two 2-point contact abutments A and B define the position of the base plate in direction of the insertion movement.

Furthermore, the position of the base plate 1 in direction of the insertion movement is defined further by the projections 24 abutting at the steps 21 and 22.

## Claims

1. Attachment arrangement for a camera module (2) at a vehicle comprising
- a base plate (1) which is attachable at a vehicle fixed structure, wherein
- the camera module (2) comprises a housing (20) and at least one camera (3) arranged therein, wherein
- the housing (20) is attached at the base plate (1) with at least two spring loaded protrusions (14,15) each abutting at separated attachment flanges (4,5), wherein
- the base plate (1) or the housing (20) is provided with three alignment pins (6), which are distanced to the attachment flanges (4,5) and the protrusions (14,15), and
- the housing (20) or the base plate (1) is provided with three alignment surface structures (7), which are distanced to the protrusions (14,15) and the attachment flanges (4,5), and
- the housing (20) abuts with three pairs of one alignment surface structure (7) and one alignment pin (6) at the base plate (1) when the camera module (2) is mounted via the housing (20) at the base plate (1), wherein
- the base plate (1) and/or the camera housing (20) is provided with at least two parallel extending rips (23), and
- the rips (23) are arranged parallel to the mounting direction of the camera module (2),
**characterized in that**
- at least one of the rips (23) is used as a guidance for at least one alignment pin (6) in the assembly process.

2. Attachment arrangement according to claim 1, **characterized in that**,
- at least one pair of one alignment surface structure (7) and one alignment pins (6) is designed as a 2-point-contact abutment (A,B,C).

3. Attachment arrangement according to claim 2, **characterized in that**,
- at least one 2-point contact abutment (A,B,C) is designed as a contact of a groove and a conical surface.

4. Attachment arrangement according to one of the claim 2 or 3, **characterized in that**
- at least two pairs of one alignment surface structure (7) and one alignment pin (6) are designed as 2-point-contact abutments (A,B,C), wherein
- the contact points (11) of the 2-point contact abutments (A,B,C) are arranged **in that** way, that the connecting line (L1,L2,L3) of the contact points (11) of one pair is arranged perpendicular to the connecting line (L1,L2,L3) of the contact points (11) of the other pair of contact points (11).

5. Attachment arrangement according to one of the claims 1 to 4, **characterized in that**
- at least one of the rips (23) comprises a step (21,22) and the opposing base plate (1) and/or camera housing (20) comprise a projection (24) which limits the assembly movement of the camera module (2) to a predefined position with respect to the base plate (1) by abutting at the step (21,22).

## Patentansprüche

1. Befestigungsanordnung für ein Kameramodul (2) an einem Fahrzeug, wobei die Befestigungsanordnung umfasst:
- eine Grundplatte (1), die an einer an einem fahrzeugfesten Struktur angebracht werden kann, wobei
- das Kameramodul (2) ein Gehäuse (20) und wenigstens eine darin angeordnete Kamera (3) umfasst, wobei
- das Gehäuse (20) an der Grundplatte (1) mit wenigstens zwei federbelasteten Vorsprüngen (14, 15), die jeder an getrennten Befestigungsflanschen (4, 5) anliegen, angebracht wird, wobei
- die Grundplatte (1) oder das Gehäuse (20) mit drei Passstiften (6) versehen ist, die zu den Befestigungsflanschen (4, 5) und den Vorsprüngen (14, 15) beabstandet sind, und
- das Gehäuse (20) oder die Grundplatte (1) mit drei Ausrichtungsoberflächenstrukturen (7), die zu den Vorsprüngen (14, 15) und zu den Befestigungsflanschen (4, 5) beabstandet sind, versehen ist, und
- das Gehäuse (20) mit drei Paaren einer Ausrichtungsoberflächenstruktur (7) und eines Passstifts (6) an der Grundplatte (1) anliegt, wenn das Kameramodul (2) über das Gehäuse (20) an der Grundplatte (1) montiert ist, wobei
- die Grundplatte (1) und/oder das Kameragehäuse (20) mit wenigstens zwei parallel verlaufenden Rippen (23) versehen ist, und
- die Rippen (23) parallel zu der Montagerichtung des Kameramoduls (2) angeordnet sind,
**dadurch gekennzeichnet, dass**
- wenigstens eine der Rippen (23) in dem Zusammenbauprozess als eine Führung für wenigstens einen Passstift (6) verwendet wird.

2. Befestigungsanordnung nach Anspruch 1, **dadurch gekennzeichnet, dass**
- wenigstens ein Paar einer Ausrichtungsoberflächenstruktur (7) und eines Passstifts (6) als ein 2-Punkt-Kontakt-Widerlager (A, B, C) ausgelegt ist.

3. Befestigungsanordnung nach Anspruch 2, **dadurch gekennzeichnet, dass**
- wenigstens ein 2-Punkt-Kontakt-Widerlager (A, B, C) als ein Kontakt einer Nut und einer konischen Oberfläche ausgelegt ist.

4. Befestigungsanordnung nach einem der Ansprüche 2 oder 3, **dadurch gekennzeichnet, dass**
- wenigstens zwei Paare einer Ausrichtungsoberflächenstruktur (7) und eines Passstifts (6) als 2-Punkt-Kontakt-Widerlager (A, B, C) ausgelegt sind, wobei
- die Kontaktpunkte (11) der 2-Punkt-Kontakt-Widerlager (A, B, C) in der Weise angeordnet sind, dass die Verbindungslinie (L1, L2, L3) der Kontaktpunkte (11) eines Paars senkrecht zu der Verbindungslinie (L1, L2, L3) der Kontaktpunkte (11) des anderen Paars von Kontaktpunkten (11) angeordnet ist.

5. Befestigungsanordnung nach einem der Ansprüche 1 bis 4, **dadurch gekennzeichnet, dass**
- wenigstens eine der Rippen (23) eine Stufe (21, 22) umfasst und die gegenüberliegende Grundplatte (1) und/oder das gegenüberliegende Kameragehäuse (20) einen Vorsprung (24) umfasst, der die Zusammenbaubewegung des Kameramoduls (2) durch Anliegen an der Stufe (21, 22) auf eine im Voraus definierte Position in Bezug auf die Grundplatte (1) begrenzt.

## Revendications

1. Agencement de fixation pour un module de caméra (2) sur un véhicule, comprenant
- - une plaque de base (1) qui peut être fixée sur une structure fixe de véhicule, dans lequel
- le module de caméra (2) comprend un boîtier (20) et au moins une caméra (3) agencée à l'intérieur, dans lequel
- le boîtier (20) est fixé sur la plaque de base (1) avec au moins deux saillies à ressort (14, 15) venant chacune en butée sur des brides de fixation séparées (4, 5), dans lequel
- la plaque de base (1) ou le boîtier (20) est muni(e) de trois broches d'alignement (6), qui sont espacées des brides de fixation (4, 5) et des saillies (14, 15), et
- le boîtier (20) ou la plaque de base (1) est muni(e) de trois structures de surface d'alignement (7), qui sont espacées des saillies (14, 15) et des brides de fixation (4, 5), et
- le boîtier (20) vient en butée avec trois paires d'une structure de surface d'alignement (7) et d'une broche d'alignement (6) au niveau de la plaque de base (1) lorsque le module de caméra (2) est monté par le biais du boîtier (20) sur la plaque de base (1), dans lequel
- la plaque de base (1) et/ou le boîtier de caméra (20) est muni(e) d'au moins deux fentes (23) qui s'étendent parallèlement (23), et
- les fentes (23) sont agencées parallèlement à la direction de montage du module de caméra (2),
**caractérisé en ce**
- **qu'**au moins une des fentes (23) est utilisée comme guide pour au moins une broche d'alignement (6) dans le processus d'assemblage.

2. Agencement de fixation selon la revendication 1, **caractérisé en ce**
- **qu'**au moins une paire d'une structure de surface d'alignement (7) et d'une broche d'alignement (6) est conçue sous la forme d'une butée à deux points de contact (A, B, C).

3. Agencement de fixation selon la revendication 2, **caractérisé en ce**
- **qu'**au moins une butée à deux points de contact (A, B, C) est conçue sous la forme d'un contact d'une rainure et d'une surface conique.

4. Agencement de fixation selon une des revendications 2 ou 3, **caractérisé en ce**
- **qu'**au moins deux paires d'une structure de surface d'alignement (7) et d'une broche d'alignement (6) sont conçues sous la forme de butées à deux points de contact (A, B, C), dans lequel
- les points de contact (11) des butées à deux points de contact (A, B, C) sont agencés de telle sorte que la ligne de connexion (L1, L2, L3) des points de contact (11) d'une paire est agencée perpendiculairement à la ligne de connexion (L1, L2, L3) des points de contact (11) de l'autre paire de points de contact (11).

5. Agencement de fixation selon une des revendications 1 à 4, **caractérisé en ce**
- **qu'**au moins une des fentes (23) comprend un gradin (21, 22) et la plaque de base opposée(1) et/ou le boîtier de caméra (20) comprend une saillie (24) qui limite le mouvement d'assemblage du module de caméra (2) vers une position prédéfinie par rapport à la plaque de base (1) en venant en butée contre le gradin (21, 22).
